# EUROPEAN PATENT SPECIFICATION

(11) **EP 4 496 152 B1**
(45) Date of publication and mention of the grant of the patent: **02.09.2026**
(21) Application number: 23769782.6
(22) Date of filing: 14.03.2023
(51) Int. Cl.: H01R 31/06, H01B 7/00, H01B 7/42, B60L 53/16, B60L 53/18, B60R 16/02, H01R 31/00, H02G 3/03, H02G 3/04, H02G 15/02, B60L 53/302

(54) **ELECTRIC ENERGY TRANSMISSION ASSEMBLY AND VEHICLE**
ELEKTRISCHE ENERGIEÜBERTRAGUNGSANORDNUNG UND FAHRZEUG
ENSEMBLE DE TRANSMISSION D'ÉNERGIE ÉLECTRIQUE ET VÉHICULE

(30) Priority: 14.03.2022 CN 202210248400
(43) Date of publication of application: 22.01.2025
(73) Proprietor: Jilin Zhong Ying High Technology Co., Ltd., Jilin 130028 (CN)
(72) Inventor: WANG, Chao, Changchun, Jilin 130028 (CN)
(74) Representative: Boult Wade Tennant LLP
(86) International application number: PCT/CN2023/081363
(87) International publication number: WO 2023/174280

(56) References cited:
- CN-A- 109 786 021
- CN-A- 110 014 951
- CN-A- 111 162 489
- CN-A- 111 584 146
- CN-A- 114 709 679
- CN-B- 111 162 489
- CN-U- 204 333 535
- CN-U- 208 422 505
- CN-U- 209 433 929
- CN-U- 210 091 741
- CN-U- 210 091 741
- CN-U- 210 668 833
- CN-U- 210 805 318
- CN-U- 210 805 318
- CN-U- 213 123 919
- CN-U- 214 589 594
- CN-U- 217 823 612
- JP-A- 2010 056 058
- US-A1- 2009 239 408

## Description

The present disclosure claims priority to Chinese Patent Application CN202210248400.9, filed on March 14, 2022, and entitled "Electric Energy Transmission Assembly and Vehicle".

### TECHNICAL FIELD

The present disclosure relates to the technical field of electric energy transmission, and particular to an electric energy transmission assembly and a vehicle.

### BACKGROUND

In the prior art, an electric automobile is a vehicle in which a vehicle-mounted power source is used as power and wheels are driven by an electric motor for traveling, and is widely accepted by people and promoted in the market due to environmental protection and energy conservation. With the development of science and technology, the driving range of the electric automobile is greatly increased, and the charging time is greatly shortened. However, in an existing electric energy transmission system, the cable core used in the connector is not provided with a mechanism for active heat dissipation, and the heat dissipation performance needs to be improved. A new energy automobile motor controller wire harness is known in the prior art, e.g. from CN111584146A. A heat dissipation flat cable for charging new energy automobile is known in the prior art, e.g. from CN210091741U. CN 210 805 318 U discloses electric energy transmission assembly comprising at least one electric connection skeleton and connectors provided at two ends of the electric connection skeleton, the two ends of the electric connection skeleton are electrically connected to the connection terminals, and at least one heat dissipation fin is provided on a periphery of the electric connection skeleton. Therefore, there is an urgent need in the market for developing a new-structure electric energy transmission connector to help people solve the existing problem.

### SUMMARY

The present invention is defined by the independent claims. Further embodiments are set forth in the dependent claims. Any references to inventions or embodiments not falling within the scope of the independent claims are to be interpreted as examples useful for understanding the invention. In order to solve the above problem, in a first aspect of the present disclosure, an electric energy transmission assembly is provided. The electric energy transmission assembly includes at least one electric connection skeleton and connectors provided at two ends of the electric connection skeleton, and the connectors includes a connection terminal, the two ends of the electric connection skeleton are electrically connected to the connection terminals, and at least one heat dissipation fin is provided on a periphery of the electric connection skeleton.

The electric connection skeleton is made of pure aluminum or an aluminum alloy with the aluminum content being 90% or above.

At least a portion of the electric connection skeleton is of a hollow structure.

The heat dissipation fin and the electric connection skeleton are integrally formed.

The heat dissipation fin and the electric connection skeleton are connected in a welding or bonding or snap-fitting or threaded connection or crimping manner.

The heat dissipation fin and the electric connection skeleton are made of different materials.

The heat dissipation fin is made of a high-heat-conductivity material.

The high-heat-conductivity material includes one or more selected from a metal, a heat-conducting insulating rubber, a flexible heat-conducting pad and a heat-conducting resin.

The heat conductivity of the high-heat-conductivity material is greater than or equal to 98 W/m·K.

A cross section of the electric connection skeleton is in one or more selected from a circular shape, an oval shape, a rectangular shape, a polygonal shape, an A shape, a B shape, a D shape, an M shape, an N shape, an O shape, an S shape, an E shape, an F shape, an H shape, a K shape, an L shape, a T shape, a P shape, a U shape, a V shape, a W shape, an X shape, a Y shape, a Z shape, a semi-arc shape, an arc shape and a wavy shape.

A cross section of the heat dissipation fin is in one or more selected from an arc shape, a gear shape, a trapezoidal shape, a polygonal shape, a quadrangular shape, a fusiform shape, a curved shape and a wavy shape.

An included angle between a direction of an outward extension of the heat dissipation fin from the electric connection skeleton or a tangential direction of the outward extension and a radial direction of the electric connection skeleton is 0° to 53°.

The width of a cross section of the heat dissipation fin at a position close to the electric connection skeleton is greater than that of the cross section of the heat dissipation fin at a position away from the electric connection skeleton.

All corners of a cross section of the heat dissipation fin are chamfered or rounded.

A plurality of heat dissipation fins are provided, and the plurality of heat dissipation fins are distributed on the periphery of the electric connection skeleton.

The plurality of heat dissipation fins are uniformly distributed on the periphery of the electric connection skeleton.

Radial heights of the plurality of heat dissipation fins are the same.

Radial heights of the plurality of heat dissipation fins are different.

The heat dissipation fins with the different radial heights are arranged at intervals.

A maximum radial height of the heat dissipation fin is 1% to 56% of a maximum outer diameter of the electric connection skeleton.

A peripheral face of the heat dissipation fin is a plane.

A peripheral face of the heat dissipation fin is an arc face.

The heat dissipation fin is arranged in a spiral shape in an axial direction of the electric connection skeleton.

A minimum screw pitch of the spiral shape is equal to the maximum outer diameter of the electric connection skeleton.

A periphery of the heat dissipation fin is sleeved with an insulating layer.

A heat dissipation arm is further provided at an end portion of the heat dissipation fin away from the electric connection skeleton, and the heat dissipation fin and the heat dissipation arm are integrally formed.

A heat dissipation arm is further provided at an end portion of the heat dissipation fin away from the electric connection skeleton, and the heat dissipation fin and the heat dissipation arm are connected in a welding or bonding or snap-fitting or threaded connection or crimping manner.

The thickness of the heat dissipation arm in a radial direction is 1% to 35% of the maximum outer diameter of the electric connection skeleton.

The heat dissipation fin and the heat dissipation arm are made of different materials.

The heat dissipation arm is made of a high-heat-conductivity material.

The high-heat-conductivity material includes one or more selected from a metal, a heat-conducting insulating rubber, a flexible heat-conducting pad and a heat-conducting resin.

A cross section of the heat dissipation arm is in one or more selected from a trapezoidal shape, a polygonal shape, a quadrangular shape, a fusiform shape, a curved shape or a wavy shape.

The heat dissipation fin is arranged at a certain angle relative to the heat dissipation arm.

The heat dissipation fin and the heat dissipation arm are arranged in a T shape or an L shape.

A periphery of the heat dissipation fin is closed by means of the heat dissipation arm.

A periphery of the heat dissipation arm is sleeved with an insulating layer.

A periphery of the insulating layer is further sleeved with a shielding layer and an outer insulating layer.

The electric connection skeleton and the connection terminal is connected in a welding or crimping manner.

At least a portion region of the electric connection skeleton is a flexible body.

The electric connection skeleton includes at least one bent portion.

One of the connectors is a charging socket.

The present disclosure further provides a vehicle, including the electric energy transmission assembly.

According to the invention, the vehicle further includes a heat dissipation device, and when the periphery of the heat dissipation fin is sleeved with the insulating layer, a cavity is formed by a gap between the insulating layer and the heat dissipation fin, and the heat dissipation device conveys air into the cavity.

In another embodiment, the vehicle further includes a heat dissipation device, and when the periphery of the heat dissipation fin is closed by the heat dissipation arm, a cavity is formed by a gap between the heat dissipation arm and the heat dissipation fin, and the heat dissipation device conveys air into the cavity.

In another embodiment, the vehicle further includes a heat dissipation device, and the periphery of the heat dissipation arm is sleeved with the insulating layer, a cavity is formed by a gap among the insulating layer, the heat dissipation fin and the heat dissipation arm, and the heat dissipation device conveys air into the cavity.

The present disclosure has the following technical effects:
1. the heat dissipation fin is provided along the periphery of the electric connection skeleton, and this structure can increase the heat dissipation area of the electric connection skeleton, can enhance the heat dissipation effect during operation, and has large current carrying capacity and better electric conductivity;
2. by means of the hollow structure used in the present disclosure, increase of the resistance can be effectively avoided, thereby ensuring the transmission efficiency; and the electric connection skeleton with the smaller wire diameter can be used for transmission of the same current, and meanwhile, the hollow structure can reduce the weight of the entire vehicle and save the cost;
3. the transmission of the same current allows the use of an electrical connection skeleton 3 with a smaller wire diameter, and meanwhile, the hollow structure can reduce the weight and save the cost; and
4. due to the skin effect, the current is concentrated on a surface of the electric connection skeleton 3, and the hollow structure can effectively reduce the weight and cannot reduce the magnitude of the conducting current; and in addition, due to the heat dissipation effect of the heat dissipation fin 4, the temperature of the hollow electric connection skeleton 3 does not exceed the standard when the current flows through it.

### BRIEF DESCRIPTION OF THE DRAWINGS

Drawings incorporated in the specification and constituting a portion of the specification show embodiments of the present disclosure, and are used for explaining principles of the present disclosure together with the explanations thereof.
FIG. 1 is a structural schematic diagram of an electric energy transmission connector according to the present disclosure;
FIG. 2 to FIG. 4 are section views of an electric connection skeleton according to the present disclosure;
FIG. 5 to FIG. 6 are section views of heat dissipation fins of an electric connection skeleton according to the present disclosure;
FIG. 7 to FIG. 8 are section views of an electric connection skeleton with heat dissipation arms according to the present disclosure; and
FIG. 9 to FIG. 10 are structural schematic diagrams of an electric connection skeleton according to the present disclosure.

In the drawings, the reference numerals are as follows:
1. connector; 2. connection terminal; 3. electric connection skeleton; 4. heat dissipation fin; 5. insulating layer; and 6. heat dissipation arm.

### DESCRIPTION OF THE EMBODIMENTS

Various embodiments of the present disclosure will now be described in detail with reference to the drawings. It should be noted that, unless otherwise specified, the relative arrangements, numeric expressions and values of components and steps set out in these embodiments do not limit the scope of the present disclosure.

Actually, the following description of at least one embodiment is only for the illustrative purpose, and shall not be construed as any limitation on the present disclosure or the application and use thereof.

For those of ordinary skill in the art, the known techniques, methods and devices may not be discussed in detail. However, under appropriate conditions, the techniques, methods and devices should be regarded as a part of the specification.

In all examples shown and discussed here, any specific value should be explained as exemplary only, and does not serve as a limitation. Therefore, other examples of the embodiments may have different values. An electric connection skeleton 3 with the smaller wire diameter can be used for transmission of the same current, and meanwhile, a hollow structure can reduce the weight and save the cost.

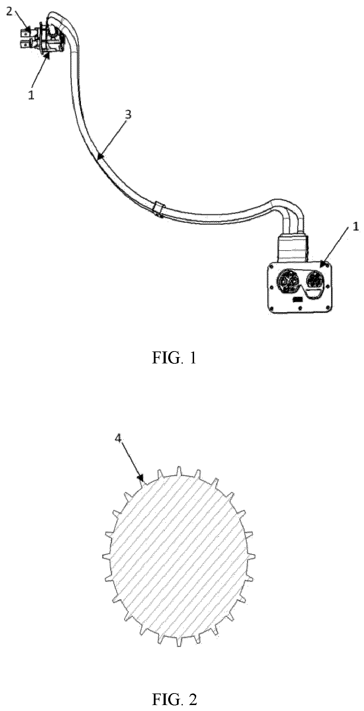

An electric energy transmission assembly, as shown in FIG. 1, includes at least one electric connection skeleton 3 and connectors 1 provided at two ends of the electric connection skeleton 3, and the electric connectors 1 includes a connection terminal 2, the two ends of the electric connection skeleton 3 are electrically connected to the connection terminals 2, and at least one heat dissipation fin 4 is provided on a periphery of the electric connection skeleton 3.

As shown in FIG. 1 to FIG. 4, the heat dissipation fin 4 is provided along the periphery of the electric connection skeleton 3, which can increase the heat dissipation area of the electric connection skeleton 3, can enhance the heat dissipation effect, and has large current carrying capacity and better electric conductivity. Specifically, the heat dissipation fin 4 is provided in an axial direction extending along of the electric connection skeleton 3.

In a specific implementation manner, at least a portion of the electric connection skeleton 3 is of the hollow structure. The hollow structure is more beneficial to heat dissipation of the electric connection skeleton 3. When an alternating current or an alternating electromagnetic field exists in a conductor, the current distribution in the conductor is non-uniform, the current is concentrated at a "skin" portion of the conductor, that is, the current is concentrated on a thin layer of an outer surface of the conductor, the closer to the surface of the conductor, the larger the density of the current, and the current inside the conductor is actually small, resulting in increase of the resistance of the conductor, and increase of loss power thereof. This phenomenon is called the skin effect. By means of the hollow structure used in the present disclosure, the increase of the resistance can be effectively avoided, thereby ensuring the transmission efficiency.

Due to the skin effect, the current is concentrated on a surface of the electric connection skeleton 3, and the hollow structure can effectively reduce the weight and cannot reduce the magnitude of the conducting current. In addition, due to the heat dissipation effect of the heat dissipation fin 4, the temperature of the hollow electric connection skeleton 3 does not exceed the standard when the current flows through it.

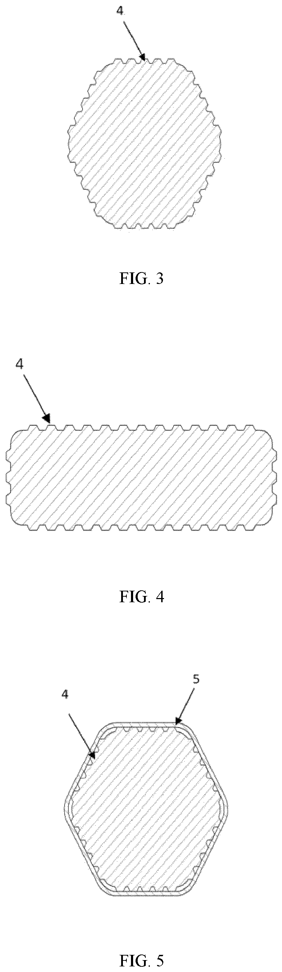

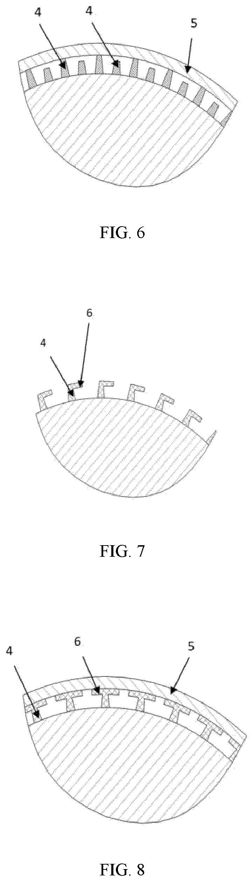

As shown in FIG. 5 and FIG. 6, the periphery of the heat dissipation fin 4 is sleeved with an insulating layer 5.

The insulating layer 5 is made of PVC (Polyvinyl chloride), on one hand, the insulating property is ensured, and on the other hand, the layer has certain water resistance, wear resistance and hardness. An insulating material of a cable can also be one or more selected from rubber, TPE (Thermoplastic Elastomers), XPE, PP (Polypropylene), XLPE (Crosslinked Polyethylene), FEP (Fluorinated Ethylene Propylene), ETFE (Ethylene-Tetra-Fluoro-Ethlene), TPR (Thermo-Plastic-Rubber), and TPFE (Polytetrafluoroethylene).

The periphery of the heat dissipation fin 4 is sleeved with the insulating layer 5, and the periphery of the heat dissipation fin 4 is attached to the insulating layer 5, thereby ensuring that heat generated by the electric connection skeleton 3 is conducted to the outside.

In a specific implementation manner, the electric connection skeleton 3 is made of pure aluminum or an aluminum alloy with the aluminum content being 90% or above.

The pure aluminum or the aluminum alloy with the aluminum content being 90% or above is used to replace a copper conductor core commonly used in the prior art, the density of aluminum is only one third of that of copper, according to the difference in the electrical solid conductor core resistivity, on the premise of meeting the same electric conductivity, the wire diameter ratio of aluminum and copper is only 1.28 times, the weight of an aluminum material is only a half that of a copper material with the same current carrying capacity, thus under the condition of not increasing the cable loading space, the wire stock weight can be greatly reduced, and the light weight of a vehicle body can be achieved. In addition, an aluminum conductor core (including an aluminum core or other alloy materials) which is low in specific gravity and low in material price replaces a copper conductor core which is high in specific gravity and high in material price, so that the material cost and transportation cost can be reduced, and the production cost of the vehicle is saved.

Exemplarily, the aluminum alloy is an aluminum copper alloy or an aluminum magnesium alloy or an aluminum lithium alloy or an aluminum manganese alloy or an aluminum zinc alloy or an aluminum silicon alloy which contain the aluminum content being 90% or above.

In a specific implementation manner, the heat dissipation fin 4 and the electric connection skeleton 3 are integrally formed.

The heat dissipation fin 4 and the electric connection skeleton 3 are set up using the same material and integrally formed, thereby improving the production efficiency. Specifically, the electric connection skeleton 3 and the heat dissipation fin 4 can be integrally formed with a continuous extrusion technology, so that the heat dissipation fin 4 is more firmly connected to the electric connection skeleton 3 and is not prone to falling.

In a specific implementation manner, the heat dissipation fin 4 and the electric connection skeleton 3 are connected in a welding or bonding or snap-fitting or threaded connection or crimping manner.

Specifically, according to the actual use environment, the heat dissipation fin 4 and the electric connection skeleton 3 can also be connected in the welding or bonding manner.

The specific welding manner includes one or more selected from a resistance welding manner, a friction welding manner, an ultrasonic welding manner, an arc welding manner, a laser welding manner, an electron beam welding manner, a pressure diffusion welding manner, and a magnetic induction welding manner.

The resistance welding manner refers to a method of using a large current to pass through a contact point between an electrode and a workpiece and generating heat by the contact resistance to achieve welding.

The friction welding manner refers to a method of using heat produced by rubbing of a contact face of the workpiece as a heat source and enabling the workpiece to be subjected to plastic deformation under the action of pressure so as to perform welding.

The ultrasonic welding manner means that high-frequency vibration waves are transmitted to surfaces of two objects to be welded and under the condition of pressurization, the surfaces of the two objects rub against each other to achieve fusion between two molecular layers.

The arc welding manner means that an electric arc serves as a heat source, by means of the physical phenomenon of air discharge, electric energy is converted into heat and mechanical energy required by welding, so as to achieve the purpose of connecting metals, and main methods include a shielded metal arc welding method, a submerged arc welding method and a gas shielded welding method.

The laser welding manner is an efficient precision welding method using a laser beam with high energy density as a heat source.

The electron beam welding manner means an accelerated and focused electron beam bombards a welding face placed in the vacuum or non-vacuum so that a welded workpiece is melted for welding.

The pressure welding manner is a method for applying pressure to a welded workpiece so that connection faces make close contact to generate certain plastic deformation to complete welding.

The diffusion welding manner refers to a solid-state welding method in which a workpiece is pressurized at a high temperature without generating visible deformation and relative movement.

The magnetic induction welding manner means two welded workpieces produce an instantaneous high-speed collision under the action of a strong pulsed magnetic field, surface layers of materials are subjected to high pressure waves, and thus atoms of the two materials meet within the atomic spacing, thereby forming stable metallurgical bonding on an interface. It is one kind of solid-state cold welding, by which conducting metals with similar or dissimilar properties can be welded together.

For the specific welding manner, the appropriate connection manner or connection manner combination is selected according to actual states of the heat dissipation fin 4 and the electric connection skeleton 3, thereby achieving effective electric connection.

The threaded connection manner refers to screw thread connection. This is a detachable connection in which connected members are connected into a whole by means of a threaded member (or threaded portions of the connected members). Common threaded connection members include bolts, studs, screws and set screws, most of which are standard members.

The snap-fitting manner means that the heat dissipation fin 4 or the electric connection skeleton 3 is provided with a clamping jaw or a corresponding clamping groove, and assembly is performed by means of the clamping groove and the clamping jaw to connect the two parts together. The snap-fitting manner has advantages of quick connection and detachability.

Contact faces of the heat dissipation fin 4 and the electric connection skeleton 3 are bonding layers, the bonding layers are viscous materials made of heat-conducting materials, and the heat dissipation fin 4 and the electric connection skeleton 3 are bonded together by means of the bonding layers.

Crimping is a production technology for stamping the heat dissipation fin 4 with the electric connection skeleton 3 into a whole by means of a crimping machine after assembly. The crimping has an advantage of mass production, and a large number of products with stable quality can be quickly manufactured by means of an automatic crimping machine.

In a specific implementation manner, the heat dissipation fin 4 and the electric connection skeleton 3 are made of different materials. The electric connection skeleton 3 has a main function of conducting the current, has the high electric conductivity, and is usually made of a material with the good electric energy transmission performance. However, the material with the high electric conductivity may not have the high heat conductivity. The heat dissipation fin 4 can be made of a material with the higher heat conductivity, and such combination can make the electric energy transmission assembly have the good electric conductivity and good heat dissipation performance at the same time.

The heat dissipation fin 4 is made of a high-heat-conductivity material. The high-heat-conductivity material can timely emit the generated heat, thereby reducing the temperature of the electric energy transmission assembly, and ensuring the safety.

Specifically, the high-heat-conductivity material includes one or more selected from a metal, a heat-conducting insulating rubber, a flexible heat-conducting pad and a heat-conducting resin. The heat-conducting insulating rubber has the excellent heat conductivity and can be widely applied to manufacturing of various heat transfer media, during use, general cleaning treatment is performed on the surface of the electric connection skeleton 3, and the heat dissipation fin 4 made of the heat-conducting insulating rubber is provided on the electric connection skeleton 3. The flexible heat-conducting pad is a gap filling heat-conducting material with a high performance, and is mainly used for a transfer interface between an electronic device and a heat dissipation sheet or an outer shell of a product. The pad has the good viscosity, flexibility, the good compression performance, and the excellent heat conductivity. Thus, air can be completely discharged during use of the pad, thereby achieving the sufficient contact. The heat dissipation effect is obviously improved. The heat-conducting resin has the characteristics of excellent insulation performance, small curing shrinkage, high mechanical strength and good chemical medicine resistance. A user can select different materials according to requirements.

In a specific implementation manner, the heat conductivity of the high-heat-conductivity material is greater than or equal to 98 W/m·K. In order to verify the influence of the heat conductivity of the high-heat-conductivity material on the temperature rise of the electric connection skeleton 3, the inventor selects 10 electric connection skeletons 3 with the same sectional areas, same materials and same lengths, the same current is introduced, the high-heat-conductivity materials with different heat conductivities are used as the heat dissipation fins 4, and temperature rise values of the electric connection skeletons 3 are read and recorded in Table 1. A test method is as follows: in a closed environment, introducing the same current to the electric connection skeletons 3 with the heat dissipation fins 4 made of the different materials, recording temperatures before electrifying and stable temperatures after electrifying, making a difference, and taking an absolute value of the difference. In this embodiment, the temperature rise less than 50 K is an qualified value.

**Table 1: Influence of high-heat-conductivity materials with different heat conductivities on temperature rises of electric connection skeletons 3**

| | | | | | | | | | | | | |
|---|---|---|---|---|---|---|---|---|---|---|---|---|
| Heat conductivity (W/m·K) | | | | | | | | | | | | |
| 60 | 70 | 80 | 90 | 95 | 98 | 105 | 110 | 120 | 125 | 130 | 135 | 140 |
| Temperature rise of electric connection skeleton 3 (K) | | | | | | | | | | | | |
| 63.8 | 58.5 | 55.5 | 52.7 | 50.2 | 48.6 | 41.4 | 37.1 | 33.2 | 30.8 | 27.5 | 26.8 | 26.5 |

It can be seen from Table 1 that when the heat conductivity of the high-heat-conductivity material is less than 98 W/m·K, the temperature rise value of the electric connection skeleton 3 is unqualified, and as the heat conductivity of the high-heat-conductivity material increases, the temperature rise value of the electric connection skeleton 3 decreases. Therefore, the inventor sets the heat conductivity of the high-heat-conductivity material to be greater than or equal to 98 W/m·K.

In a specific implementation manner, a cross section of the electric connection skeleton 3 is in one or more selected from a circular shape, an oval shape, a rectangular shape, a polygonal shape, an A shape, a B shape, a D shape, an M shape, an N shape, an O shape, an S shape, an E shape, an F shape, an H shape, a K shape, an L shape, a T shape, a P shape, a U shape, a V shape, a W shape, an X shape, a Y shape, a Z shape, a semi-arc shape, an arc shape and a wavy shape.

The electric connection skeletons 3 with the different cross sections can be selected according to actual use environments. Further, as shown in FIG. 2 to FIG. 4, the cross section of the electric connection skeleton 3 is specifically in the circular shape, the rectangular shape or the hexagonal shape, which can achieve better wiring according to the contour of a vehicle body of a vehicle, and reduce the material consumption for wiring.

A cross section of the heat dissipation fin 4 is in one or more selected from an arc shape, a gear shape, a trapezoidal shape, a polygonal shape, a quadrangular shape, a fusiform shape, a curved shape and a wavy shape.

Specifically, as shown in FIG. 6, the cross section of the heat dissipation fin 4 is in the trapezoidal shape.

In a specific implementation manner, an included angle between a direction of an outward extension of the heat dissipation fin 4 from the electric connection skeleton 3 or a tangential direction of the outward extension and a radial direction of the electric connection skeleton 3 is 0° to 53°. As the included angle between the heat dissipation fin 4 and the radial direction increases, the heat dissipation fin is closer to the electric connection skeleton 3, and thus the achieved heat dissipation effect is worse.

In order to verify the influence of the included angle between the direction of the outward extension of the heat dissipation fin 4 from the electric connection skeleton 3 or the tangential direction of the outward extension and the radial direction of the electric connection skeleton 3 on the temperature rise of the electric connection skeleton 3, the inventor selects the electric connection skeletons 3 with the same sizes and the heat dissipation fins 4 with the same sizes, different included angles between the heat dissipation fins 4 and the radial directions of the electric connection skeletons 3 are tested, in a sealed environment, the same current is introduced to the different electric connection skeleton 3 samples, temperature changes of the electric connection skeletons 3 are measured, and the temperature rise less than 50 K is an qualified value.

**Table 2 Influence of included angle between direction of outward extension of heat dissipation fin 4 from electric connection skeleton 3 or tangential direction of outward extension and radial direction of electric connection skeleton 3 on temperature rise of electric connection skeleton 3**

| | | | | | | | | | | | | |
|---|---|---|---|---|---|---|---|---|---|---|---|---|
| Included angle between direction of outward extension of heat dissipation fin 4 from electric connection skeleton 3 or tangential direction of outward extension and radial direction of electric connection skeleton 3 (°) | | | | | | | | | | | | |
| 0 | 5 | 10 | 15 | 20 | 30 | 40 | 50 | 53 | 56 | 59 | 63 | 66 |
| Temperature rise of electric connection skeleton 3 (K) | | | | | | | | | | | | |
| 26.6 | 29.8 | 32.4 | 36.7 | 39.5 | 41.3 | 44.8 | 47.3 | 49.6 | 50.8 | 53.6 | 58.2 | 66.9 |

It can be seen from Table 2 that after the included angle between the heat dissipation fin 4 and the radial direction of the electric connection skeleton 3 is greater than 53°, the heat dissipation effect is obviously reduced, and the temperature rise value is unqualified. Therefore, the inventor exemplarily sets the included angle between the direction of the outward extension of the heat dissipation fin 4 from the electric connection skeleton 3 or the tangential direction of the outward extension and the radial direction of the electric connection skeleton 3 to be 0° to 53°.

In a specific implementation manner, the width of a cross section of the heat dissipation fin 4 at a position close to the electric connection skeleton 3 is greater than that of the cross section of the heat dissipation fin 4 at a position away from the electric connection skeleton 3.

As shown in FIG. 6, this design can ensure that the heat dissipation fin 4 is firmly fixed to the electric connection skeleton 3, and under the action of an external force, it can be ensured that the heat dissipation fin 4 is not prone to deformation and falling.

All corners of a cross section of the heat dissipation fin 4 are chamfered or rounded. As shown in FIG. 5, the heat dissipation fin 4 is externally covered with the insulating layer 5, and the chamfered or rounded design aims to prevent the friction with the insulating layer 5, thereby preventing damage of the insulating layer 5. In addition, when the heat dissipation fin 4 makes contact with other components, a guide effect can be achieved, thereby avoiding falling of the heat dissipation fin 4 due to the excessively high rigidity. The connection position of the bottom of the heat dissipation fin 4 with the electric connection skeleton 3 is chamfered or rounded, it can ensure that the heat dissipation fin 4 is firmly fixed to the electric connection skeleton 3, and under the action of the external force, it can be ensured that the heat dissipation fin 4 is not prone to deformation and falling.

In a specific implementation manner, as shown in FIG. 2 to FIG. 8, a plurality of heat dissipation fins 4 are provided, and the plurality of heat dissipation fins 4 are distributed on the periphery of the electric connection skeleton 3. As the number of the heat dissipation fins 4 increases, the heat dissipation effect of the electric connection skeleton 3 is improved. However, if the heat dissipation fins are too dense, air circulation may be poor, which in turn reduces the heat dissipation effect.

Further, the plurality of heat dissipation fins 4 are uniformly distributed on the periphery of the electric connection skeleton 3. The plurality of heat dissipation fins 4 are arranged on the periphery of the electric connection skeleton 3, so that the heat dissipation area is increased, and the better heat dissipation effect is achieved. In addition, in a bending process of the electric connection skeleton 3, the uniformly arranged heat dissipation fins 4 can ensure uniform stress at various positions of the electric connection skeleton 3, and can also ensure uniform stress on the insulating layer 5 externally covering the electric connection skeleton 3.

Further, the heat dissipation fins 4 is capable of being arranged on the periphery of the electric connection skeleton 3 in parallel at intervals.

As shown in FIG. 2, radial heights of the plurality of heat dissipation fins 4 are the same. The heat dissipation fins 4 are externally covered with the insulating layer 5, and the uniform stress on the insulating layer 5 is ensured.

As shown in FIG. 6, the radial heights of the plurality of heat dissipation fins 4 are different. The heat dissipation fins 4 with the different radial heights are arranged at intervals.

The radial heights of the heat dissipation fins 4 are different, and air can circulate between two adjacent heat dissipation fins 4 with the different radial heights, thereby improving the heat dissipation effect.

The maximum radial height of the heat dissipation fin 4 is 1% to 6% of the maximum outer diameter of the electric connection skeleton 3.

The setting of the maximum radial height of the heat dissipation fin 4 has a certain influence on the temperature rise of the electric connection skeleton 3.

In order to verify the influence of the percent of the radial height of the heat dissipation fin 4 to the maximum outer diameter of the electric connection skeleton 3 on the temperature rise of the electric connection skeleton 3, the inventor carries out related tests. A test method is as follows: selecting the same electric connection skeletons 3, and the electric connection skeleton 3 and the heat dissipation fins 4 are integrally formed; and the ratios of the radial heights of the heat dissipation fins 4 to the electric connection skeletons 3 being different, in a sealed environment, introducing the same current to the different electric connection skeletons 3, the temperature rise less than 50 K being an qualified value, after the insulating layer 5 is removed, testing the electric connection skeletons 3 bent by 60°, and observing whether the heat dissipation fins 4 are deformed. Results are as shown in Table 3.

**Table 3 Influence of percent of maximum radial height of heat dissipation fin 4 to maximum outer diameter of electric connection skeleton 3 on temperature rise of electric connection skeleton 3 and deformation of heat dissipation fin 4**

| | | | | | | | | | | | | |
|---|---|---|---|---|---|---|---|---|---|---|---|---|
| Percent of maximum radial height of heat dissipation fin 4 to maximum outer diameter of electric connection skeleton 3 (%) | | | | | | | | | | | | |
| 0.8 | 1 | 5 | 8 | 10 | 15 | 20 | 25 | 30 | 40 | 50 | 56 | 58 |
| Temperature rise of electric connection skeleton 3 (K) | | | | | | | | | | | | |
| 50.2 | 49 | 47.5 | 44 | 41.2 | 39.8 | 38.5 | 37.1 | 33.2 | 30.9 | 27.5 | 26.8 | 26.5 |
| Whether the heat dissipation fin 4 is deformed | | | | | | | | | | | | |
| No | No | No | No | No | No | No | No | No | No | No | No | Yes |

It can be seen from Table 3 that when the percent of the radial height of the heat dissipation fin 4 to the maximum outer diameter of the electric connection skeleton 3 is less than 1%, the temperature rise of the electric connection skeleton 3 is greater than 50 K, which does not meet the requirement. When the percent of the radial height of the heat dissipation fin 4 to the maximum outer diameter of the electric connection skeleton 3 is greater than 56%, the heat dissipation fin 4 is deformed, which does not meet the requirement. Therefore, the inventor sets the maximum radial height of the heat dissipation fin 4 to be 1% to 56% of the maximum outer diameter of the electric connection skeleton 3.

A peripheral face of the heat dissipation fin 4 is a plane. As shown in FIG. 4, when the electric connection skeleton 3 is in a busbar shape, the peripheral face of the heat dissipation fin 4 is set to be of a planar structure, which can be better attached to the insulating layer 5.

A peripheral face of the heat dissipation fin 4 is an arc face. As shown in FIG. 3, when the electric connection skeleton 3 is in a circular or oval shape, the peripheral face of the heat dissipation fin 4 is set to be the arc face.

Specifically, according to the actual use conditions, the peripheral face of the heat dissipation fin 4 is the plane or the arc face.

In a specific implementation manner, the heat dissipation fin 4 is arranged in a spiral shape in an axial direction of the electric connection skeleton 3.

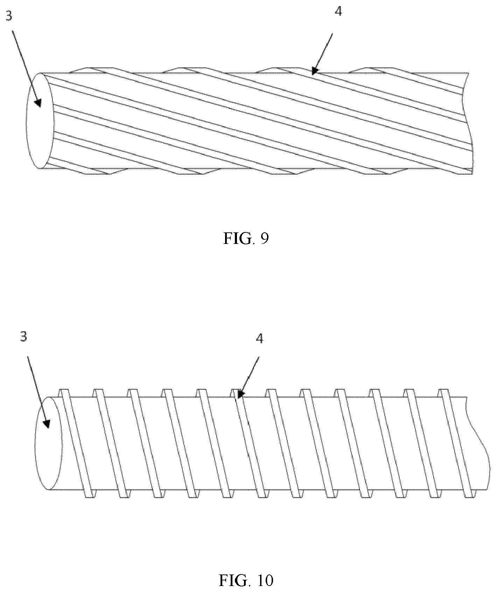

As shown in FIG. 9 to FIG. 10, the heat dissipation fin 4 is arranged in the spiral shape, a spiral passage is formed among the heat dissipation fin 4, the electric connection skeleton 3 and the insulating layer 5, this design can ensure that the same heat dissipation effects at various positions of the electric connection skeleton 3 and avoid local overheating, meanwhile, the radial height of the same heat dissipation fin 4 arranged in the spiral shape is the same, and then a gap between the insulating layer 5 and the electric connection skeleton 3 is also the same, which is more beneficial to heat dissipation. Meanwhile, for the electric connection skeleton 3 with the same length, if the heat dissipation fin 4 is arranged spirally, it is longer than the heat dissipation fin 4 arranged in parallel, so that the heat dissipation area is increased, and the heat dissipation effect of the electric energy transmission assembly is better.

The minimum screw pitch of the spiral shape is equal to the maximum outer diameter of the electric connection skeleton 3.

The minimum screw pitch of the spiral shape of the heat dissipation fin 4 is greater than or equal to the maximum outer diameter of the electric connection skeleton 3, if the screw pitch is too small, gaps between the heat dissipation arms 6 are small, and the heat dissipation effect cannot be achieved.

In a specific implementation manner, as shown in FIG. 7 and FIG. 8, a heat dissipation arm 6 is further provided at an end portion of the heat dissipation fin 4 away from the electric connection skeleton 3, and the heat dissipation fin 4 and the heat dissipation arm 6 are integrally formed. Through arrangement of the heat dissipation arm 6, heat conducted by the heat dissipation fin 4 can be more quickly conducted to the outside, thereby achieving the effect of accelerating heat dissipation. The heat dissipation arm 6 and the heat dissipation fin 4 which are integrally formed can improve the production efficiency. Specifically, the heat dissipation arm 6 and the heat dissipation fin 4 can be integrally formed with a continuous extrusion technology, so that the heat dissipation fin 4 is more firmly connected to the heat dissipation arm 6 and is not prone to falling.

A heat dissipation arm 6 is further provided at an end portion of the heat dissipation fin 4 away from the electric connection skeleton 3, and the heat dissipation fin 4 and the heat dissipation arm 6 are connected in a welding or bonding or snap-fitting or threaded connection manner.

The specific welding method may include one or more selected from a resistance welding method, a friction welding method, an ultrasonic welding method, an arc welding method, a laser welding method, an electron beam welding method, a pressure diffusion welding method, a magnetic induction welding method, a threaded connection method, a snap-fitting method, a splicing method and a crimping method.

The resistance welding manner refers to a method of using a large current to pass through a contact point between an electrode and a workpiece and generating heat by the contact resistance to achieve welding.

The friction welding manner refers to a method of using heat produced by rubbing of a contact face of the workpiece as a heat source and enabling the workpiece to be subjected to plastic deformation under the action of pressure so as to perform welding.

The ultrasonic welding manner means that high-frequency vibration waves are transmitted to surfaces of two objects to be welded, and under the condition of pressurization, the surfaces of the two objects rub against each other to achieve fusion between two molecular layers.

The arc welding manner means that an electric arc serves as a heat source, by means of the physical phenomenon of air discharge, electric energy is converted into heat and mechanical energy required by welding, so as to achieve the purpose of connecting metals, and main methods include a shielded metal arc welding method, a submerged arc welding method and a gas shielded welding method.

The laser welding manner is an efficient precision welding method using a laser beam with high energy density as a heat source.

The electron beam welding manner means an accelerated and focused electron beam bombards a welding face placed in the vacuum or non-vacuum so that a welded workpiece is melted for welding.

The pressure diffusion welding manner is a method for applying pressure to a welded workpiece so that connection faces make close contact to generate certain plastic deformation to complete welding.

The magnetic induction welding manner means two welded workpieces produce an instantaneous high-speed collision under the action of a strong pulsed magnetic field, surface layers of materials are subjected to high pressure waves, and thus atoms of the two materials meet within the atomic spacing, thereby forming stable metallurgical bonding on an interface. It is one kind of solid-state cold welding, by which conducting metals with similar or dissimilar properties can be welded together.

The bonding method is as follows: contact faces of the heat dissipation fin 4 and the heat dissipation arm 6 are bonding layers, the bonding layers are viscous materials made of heat-conducting materials, and the heat dissipation fin 4 and the heat dissipation arm 6 are bonded together by means of the bonding layers.

The snap-fitting method is as follows: one of the contact faces of the heat dissipation fin 4 and the heat dissipation arm 6 is a clamping jaw, the other one is a clamping groove, and the contact faces of the heat dissipation fin 4 and the heat dissipation arm 6 are stably connected together by means of the assembly of the clamping jaw and the clamping groove.

The threaded connection method is as follows: the heat dissipation fin 4 and the heat dissipation arm 6 are respectively provided with a thread and a screw, and contact faces of the heat dissipation fin 4 and the heat dissipation arm 6 are stably connected together by means of the threaded connection of the thread and the screw.

The thickness of the heat dissipation arm 6 in a radial direction is 1% to 35% of the maximum outer diameter of the electric connection skeleton 3.

The arrangement the heat dissipation arm 6 has a certain influence on the temperature rise of the electric connection skeleton 3.

In order to verify the influence of the percent of the radial thickness of the heat dissipation arm 6 to the maximum outer diameter of the electric connection skeleton 3 on the temperature rise of the electric connection skeleton 3, the inventor carries out related tests. A test method is as follows: selecting the same electric connection skeletons 3, and the heat dissipation arms 6 being integrally formed with the heat dissipation fins 4 and the electric connection skeletons 3; and the ratios of the radial thicknesses of the heat dissipation arms 6 to the maximum outer diameters of the electric connection skeletons 3 being different, in a sealed environment, introducing the same current to the different electric connection skeletons 3, and the temperature rise less than 50 K being an qualified value. Results are as shown in Table 4.

**Table 4 Influence of percent of maximum radial thickness of heat dissipation arm 6 to maximum outer diameter of electric connection skeleton 3 on temperature rise of electric connection skeleton 3**

| | | | | | | | | | | | | |
|---|---|---|---|---|---|---|---|---|---|---|---|---|
| Percent of maximum radial thickness of heat dissipation arm 6 to maximum outer diameter of electric connection skeleton 3 (%) | | | | | | | | | | | | |
| 0.5 | 0.8 | 1 | 5 | 8 | 10 | 12 | 15 | 20 | 25 | 30 | 35 | 38 |
| Temperature rise of electric connection skeleton 3 (K) | | | | | | | | | | | | |
| 51 | 50.3 | 48.5 | 44 | 41.2 | 39.8 | 38.5 | 37.1 | 33.2 | 30.9 | 27.5 | 26.8 | 26.8 |

It can be seen from Table 4 that when the percent of the maximum radial thickness of the heat dissipation arm 6 to the maximum outer diameter of the electric connection skeleton 3 is less than 1, the temperature rise value is greater than 50 K, which does not meet the requirement. However, when the ratio of the radial thickness of the heat dissipation arm 6 to the maximum outer diameter of the electric connection skeleton 3 exceeds 35%, the cooling effect is already not obvious, and the production cost will be greatly increased. Therefore, the inventor sets the thickness of the heat dissipation arm 6 in the radial direction to be 1% to 35% of the maximum outer diameter of the electric connection skeleton 3.

In a specific implementation manner, the heat dissipation fin 4 and the heat dissipation arm 6 are made of different materials. The heat dissipation fin 4 is made of a material with a good heat dissipation effect, but may have the low strength, and is prone to falling or damage when making contact with other components. In addition, the heat dissipation arm 6 is relatively thin and obviously protrudes out of the heat dissipation fin, so that it can be made of a material that has a slightly poorer heat dissipation effect than the heat conductivity of the heat dissipation fin 4 but has the very high strength.

In a specific implementation manner, the heat dissipation arm 6 is made of a high-heat-conductivity material. The arms and the heat dissipation fins 4 can be in same or different combinations.

In a specific implementation manner, the high-heat-conductivity material includes one or more selected from a metal, a heat-conducting insulating rubber, a flexible heat-conducting pad and a heat-conducting resin.

In a specific implementation manner, a cross section of the heat dissipation arm 6 is in one or more selected from a trapezoidal shape, a polygonal shape, a quadrangular shape, a fusiform shape, a curved shape or a wavy shape.

Specifically, as shown in FIG. 6 to FIG. 7, the cross section of the heat dissipation arm 6 is in the trapezoidal shape or the polygonal shape.

In a specific implementation manner, the heat dissipation fin 4 is arranged at an angle relative to the heat dissipation arm 6.

According to the actual use environment, the heat dissipation fins 4 connected to the circular electric connection skeleton 3 are annularly arranged, the heat dissipation arms 6 are covered with the insulating layer 5, and in order to be better attached to the insulating layer 5, the heat dissipation arms 6 need to be arranged at a certain angle relative to the heat dissipation fins 4. Besides, by means of the different angles, channels in different shapes can be built outside the electric connection skeleton 3, thereby achieving the better heat dissipation effect.

In a specific implementation manner, as shown in FIG. 6 and FIG. 8, the heat dissipation fin 4 and the heat dissipation arm 6 are arranged in a T shape or an L shape.

In a specific implementation manner, a periphery of the heat dissipation fin 4 is closed by means of the heat dissipation arm 6. The periphery of the heat dissipation arm 6 is closed, thereby increasing the heat dissipation area. Meanwhile, a cooling gas can be introduced into the closed cavity, thereby more quickly taking away the heat generated by the skeleton, and achieving the better heat dissipation effect.

In a specific implementation manner, as shown in FIG. 8, a periphery of the heat dissipation arm 6 is sleeved with the insulating layer 5.

The insulating layer 5 is made of PVC (Polyvinyl chloride), on one hand, the insulating property is ensured, and on the other hand, said layer has certain water resistance, wear resistance and hardness. An insulating material of a cable can also be one or more of rubber, TPE, XPE, PP, XLPE, FEP, ETFE, TPR and TPFE.

In a specific implementation manner, a periphery of the insulating layer 5 is further sleeved with a shielding layer and an outer insulating layer.

The shielding layer can reduce the interference of electromagnetic radiation generated by the electric connection skeleton 3 on other electric devices in the vehicle, and the shielding layer is made of a conductor and needs to be grounded, so that the insulating layer 5 is arranged between the shielding layer and the electric connection skeleton 3 to prevent them from making contact with each other. The outer insulating layer can prevent short-circuiting caused by the contact between the shielding layer and a vehicle shell.

In a specific implementation manner, the electric connection skeleton 3 and the connection terminal 2 are connected in a welding or crimping manner.

The specific welding manner includes one or more selected from a resistance welding manner, a friction welding manner, an ultrasonic welding manner, an arc welding manner, a laser welding manner, an electron beam welding manner, a pressure diffusion welding manner, and a magnetic induction welding manner.

In some embodiments, at least a portion the electric connection skeleton 3 is a flexible body. The flexible body can ensure a large bending angle of the electric connection skeleton 3, so that the skeleton is conveniently arranged in the vehicle body with a large corner.

In some embodiments, the electric connection skeleton 3 includes at least one bent portion. Thus, the requirement for mounting inside the vehicle body is met.

One of the connectors 1 is a charging socket.

One end of the electric connection skeleton 3 is connected to the terminal inside the charging socket, and the other end can be connected to a vehicle-mounted battery, thereby forming a complete charging system.

A vehicle includes the electric energy transmission assembly 1.

The vehicle further includes a heat dissipation device (not shown), and when the periphery of the heat dissipation fin 4 is sleeved with the insulating layer 5, as shown in FIG. 5 and FIG. 6, a cavity is formed by a gap between the insulating layer 5 and the heat dissipation fin 4, the heat dissipation device conveys air into the cavity, and air circulates, thereby achieving the better heat dissipation effect.

In a specific implementation manner, the vehicle further includes a heat dissipation device, and when the periphery of the heat dissipation fin 4 is closed by the heat dissipation arm 6, a cavity is formed by a gap between the heat dissipation arm 6 and the heat dissipation fin 4, the heat dissipation device conveys air into the cavity, and air circulates, thereby achieving the better heat dissipation effect.

In a specific implementation manner, the vehicle further includes a heat dissipation device, and the periphery of the heat dissipation arm 6 is sleeved with the insulating layer 5, as shown in FIG. 8, a cavity is formed by a gap among the insulating layer 5, the heat dissipation fin 4 and the heat dissipation arm 6, the heat dissipation device conveys air into the cavity, and air circulates, thereby achieving the better heat dissipation effect.

## Claims

1. An electric energy transmission assembly for use in a vehicle, comprising at least one electric connection skeleton (3) and connectors (1) provided at two ends of the electric connection skeleton (3), wherein each connector (1) comprises a connection terminal (2), the two ends of the electric connection skeleton (3) are electrically connected to the connection terminals (2), and at least one heat dissipation fin (4) is provided on a periphery of the electric connection skeleton (3),
**characterized in that** the vehicle comprises a heat dissipation device, the periphery of the heat dissipation fin (4) is sleeved with an insulating layer (5), a cavity is formed by a gap between the insulating layer (5) and the heat dissipation fin (4), and the heat dissipation device conveys air into the cavity.

2. The electric energy transmission assembly according to claim 1, wherein the electric connection skeleton (3) is made of pure aluminum or an aluminum alloy with the aluminum content being 90% or above;
or
wherein at least a portion of the electric connection skeleton (3) is of a hollow structure;
or
wherein the heat dissipation fin (4) and the electric connection skeleton (3) are made of different materials.

3. The electric energy transmission assembly according to claim 1, wherein the heat dissipation fin (4) is made of a high-heat-conductivity material;
preferably wherein
the heat conductivity of the high-heat-conductivity material is greater than or equal to 98 W/m·K.

4. The electric energy transmission assembly according to claim 1, wherein a cross section of the heat dissipation fin (4) is in one or more selected from an arc shape, a gear shape, a trapezoidal shape, a polygonal shape, a quadrangular shape, a fusiform shape, a curved shape and a wavy shape;
preferably wherein
an included angle between a direction of an outward extension of the heat dissipation fin (4) from the electric connection skeleton (3) or a tangential direction of the outward extension and a radial direction of the electric connection skeleton (3) is 0° to 53°.

5. The electric energy transmission assembly according to claim 1, wherein the width of a cross section of the heat dissipation fin (4) at a position close to the electric connection skeleton (3) is greater than that of the cross section of the heat dissipation fin (4) at a position away from the electric connection skeleton (3);
or
wherein all corners of a cross section of the heat dissipation fin (4) are chamfered or rounded.

6. The electric energy transmission assembly according to claim 1, wherein a plurality of heat dissipation fins (4) are provided, and the plurality of heat dissipation fins (4) are distributed on the periphery of the electric connection skeleton (3).

7. The electric energy transmission assembly according to claim 6, wherein the plurality of heat dissipation fins (4) are uniformly distributed on the periphery of the electric connection skeleton (3);
or
wherein radial heights of the plurality of heat dissipation fins (4) are the same;
or
wherein radial heights of the plurality of heat dissipation fins (4) are different, preferably wherein the heat dissipation fins (4) with the different radial heights are arranged at intervals.

8. The electric energy transmission assembly according to claim 1, wherein a maximum radial height of the heat dissipation fin (4) is 1% to 56% of a maximum outer diameter of the electric connection skeleton (3);
or
wherein a peripheral face of the heat dissipation fin (4) is a plane;
or
wherein a peripheral face of the heat dissipation fin (4) is an arc face.

9. The electric energy transmission assembly according to claim 1, wherein the heat dissipation fin (4) is arranged in a spiral shape in an axial direction of the electric connection skeleton (3);
preferably wherein
a minimum screw pitch of the spiral shape is equal to the maximum outer diameter of the electric connection skeleton (3).

10. The electric energy transmission assembly according to claim 1, wherein
a periphery of the insulating layer (5) is further sleeved with a shielding layer and an outer insulating layer (5).

11. The electric energy transmission assembly according to claim 1, wherein a heat dissipation arm (6) is further provided at an end portion of the heat dissipation fin (4) away from the electric connection skeleton (3), and the heat dissipation fin (4) and the heat dissipation arm (6) are integrally formed;
or
wherein a heat dissipation arm (6) is further provided at an end portion of the heat dissipation fin (4) away from the electric connection skeleton (3), and the heat dissipation fin (4) and the heat dissipation arm (6) are connected in a welding or bonding or snap-fitting or threaded connection or crimping manner.

12. The electric energy transmission assembly according to claim 11, wherein the thickness of the heat dissipation arm (6) in a radial direction is 1% to 35% of the maximum outer diameter of the electric connection skeleton (3);
or
wherein the heat dissipation arm (6) is made of a high-heat-conductivity material;
or
wherein a cross section of the heat dissipation arm (6) is in one or more selected from a trapezoidal shape, a polygonal shape, a quadrangular shape, a fusiform shape, a curved shape or a wavy shape;
or
wherein the heat dissipation fin (4) is arranged at a certain angle relative to the heat dissipation arm (6);
or
wherein the heat dissipation fin (4) and the heat dissipation arm (6) are arranged in a T shape or an L shape;
or
wherein a periphery of the heat dissipation fin (4) is closed by means of the heat dissipation arm (6);
or
wherein a periphery of the heat dissipation arm (6) is sleeved with an insulating layer (5).

13. The electric energy transmission assembly according to claim 1, wherein at least a portion of the electric connection skeleton (3) is a flexible body;
or
wherein the electric connection skeleton (3) comprises at least one bent portion;
or
wherein one of the connectors (1) is a charging socket.

14. A vehicle, comprising the electric energy transmission assembly according to claim 1, wherein a heat dissipation arm (6) is further provided at an end portion of the heat dissipation fin (4) away from the electric connection skeleton (3), wherein the periphery of the heat dissipation arm (6) is sleeved with an insulating layer (5), a cavity is formed by a gap among the insulating layer (5), the heat dissipation fin (4) and the heat dissipation arm (6), and the heat dissipation device conveys air into the cavity.

## Patentansprüche

1. Elektrische Energieübertragungsanordnung zur Verwendung in einem Fahrzeug, umfassend mindestens ein elektrisches Verbindungsgerüst (3) und an zwei Enden des elektrischen Verbindungsgerüsts (3) bereitgestellte Verbinder (1), wobei jeder Verbinder (1) einen Verbindungsanschluss (2) umfasst, die zwei Enden des elektrischen Verbindungsgerüsts (3) elektrisch mit den Verbindungsanschlüssen (2) verbunden sind und mindestens eine Wärmeableitungsrippe (4) an einem Umfang des elektrischen Verbindungsgerüsts (3) bereitgestellt ist,
**dadurch gekennzeichnet, dass** das Fahrzeug eine Wärmeableitungsvorrichtung umfasst, der Umfang der Wärmeableitungsrippe (4) mit einer Isolierschicht (5) ummantelt ist, ein Hohlraum durch einen Spalt zwischen der Isolierschicht (5) und der Wärmeableitungsrippe (4) ausgebildet ist und die Wärmeableitungsvorrichtung Luft in den Hohlraum leitet.

2. Elektrische Energieübertragungsanordnung nach Anspruch 1, wobei das elektrische Verbindungsgerüst (3) aus reinem Aluminium oder einer Aluminiumlegierung mit einem Aluminiumgehalt von 90 % oder mehr besteht;
oder
wobei mindestens ein Teil des elektrischen Verbindungsgerüsts (3) eine Hohlkonstruktion aufweist;
oder
wobei die Wärmeableitungsrippe (4) und das elektrische Verbindungsgerüst (3) aus unterschiedlichen Materialien bestehen.

3. Elektrische Energieübertragungsanordnung nach Anspruch 1, wobei die Wärmeableitungsrippe (4) aus einem Material mit hoher Wärmeleitfähigkeit besteht;
vorzugsweise wobei die Wärmeleitfähigkeit des Materials mit hoher Wärmeleitfähigkeit größer oder gleich 98 W/m·K ist.

4. Elektrische Energieübertragungsanordnung nach Anspruch 1, wobei ein Querschnitt der Wärmeableitungsrippe (4) in einer oder mehreren vorliegt, ausgewählt aus einer Bogenform, einer Zahnradform, einer Trapezform, einer Polygonform, einer Viereckform, einer spindelförmigen Form, einer gekrümmten Form und einer wellenförmigen Form;
vorzugsweise wobei ein eingeschlossener Winkel zwischen einer Richtung einer nach außen gerichteten Ausdehnung der Wärmeableitungsrippe (4) vom elektrischen Verbindungsgerüst (3) oder einer Tangentialrichtung der nach außen gerichteten Ausdehnung und einer radialen Richtung des elektrischen Verbindungsgerüsts (3) 0° bis 53° beträgt.

5. Elektrische Energieübertragungsanordnung nach Anspruch 1, wobei die Breite eines Querschnitts der Wärmeableitungsrippe (4) an einer Position nahe dem elektrischen Verbindungsgerüst (3) größer ist als jene des Querschnitts der Wärmeableitungsrippe (4) an einer vom elektrischen Verbindungsgerüst (3) entfernten Position;
oder
wobei alle Ecken eines Querschnitts der Wärmeableitungsrippe (4) abgeschrägt oder abgerundet sind.

6. Elektrische Energieübertragungsanordnung nach Anspruch 1, wobei eine Vielzahl von Wärmeableitungsrippen (4) bereitgestellt ist und die Vielzahl von Wärmeableitungsrippen (4) an dem Umfang des elektrischen Verbindungsskeletts (3) verteilt ist.

7. Elektrische Energieübertragungsanordnung nach Anspruch 6, wobei die Vielzahl von Wärmeableitungsrippen (4) gleichmäßig an dem Umfang des elektrischen Verbindungsskeletts (3) verteilt ist;
oder
wobei die radialen Höhen der Vielzahl von Wärmeableitungsrippen (4) gleich sind;
oder
wobei die radialen Höhen der Vielzahl von Wärmeableitungsrippen (4) unterschiedlich sind, vorzugsweise wobei die Wärmeableitungsrippen (4) mit den unterschiedlichen radialen Höhen in Abständen angeordnet sind.

8. Elektrische Energieübertragungsanordnung nach Anspruch 1, wobei eine maximale radiale Höhe der Wärmeableitungsrippe (4) 1% bis zu 56 % eines maximalen Außendurchmessers des elektrischen Verbindungsgerüsts (3) beträgt;
oder
wobei eine Umfangsfläche der Wärmeableitungsrippe (4) eine Ebene ist;
oder
wobei eine Umfangsfläche der Wärmeableitungsrippe (4) eine Bogenfläche ist.

9. Elektrische Energieübertragungsanordnung nach Anspruch 1, wobei die Wärmeableitungsrippe (4) spiralförmig in Axialrichtung des elektrischen Verbindungsgerüsts (3) angeordnet ist;
vorzugsweise wobei eine minimale Schraubensteigung der Spiralform gleich dem maximalen Außendurchmesser des elektrischen Verbindungsgerüsts (3) ist.

10. Elektrische Energieübertragungsanordnung nach Anspruch 1, wobei
ein Umfang der Isolierschicht (5) weiter mit einer Abschirmschicht und einer äußeren Isolierschicht (5) ummantelt ist.

11. Elektrische Energieübertragungsanordnung nach Anspruch 1, wobei ein Wärmeableitungsarm (6) weiter an einem Endabschnitt der Wärmeableitungsrippe (4) bereitgestellt ist, der vom elektrischen Verbindungsgerüst (3) entfernt ist, und die Wärmeableitungsrippe (4) und der Wärmeableitungsarm (6) einstückig ausgebildet sind;
oder
wobei ein Wärmeableitungsarm (6) weiter an einem Endabschnitt der Wärmeableitungsrippe (4) bereitgestellt ist, der vom elektrischen Verbindungsgerüst (3) entfernt ist, und die Wärmeableitungsrippe (4) und der Wärmeableitungsarm (6) in einer Schweiß-, Bond-, Steck-, Schraub- oder Crimpverbindung miteinander verbunden sind.

12. Elektrische Energieübertragungsanordnung nach Anspruch 11, wobei die Dicke des Wärmeableitungsarms (6) in radialer Richtung 1 % bis 35 % des maximalen Außendurchmessers des elektrischen Verbindungsgerüsts (3) beträgt;
oder
wobei der Wärmeableitungsarm (6) aus einem Material mit hoher Wärmeleitfähigkeit besteht;
oder
wobei ein Querschnitt des Wärmeableitungsarms (6) in einer oder mehreren vorliegt, ausgewählt aus einer trapezförmigen Form, einer polygonalen Form, einer viereckigen Form, einer spindelförmigen Form, einer gekrümmten Form oder einer wellenförmigen Form;
oder
wobei die Wärmeableitungsrippe (4) in einem bestimmten Winkel relativ zum Wärmeableitungsarm (6) angeordnet ist;
oder
wobei die Wärmeableitungsrippe (4) und der Wärmeableitungsarm (6) in einer T-Form oder einer L-Form angeordnet sind;
oder
wobei ein Umfang der Wärmeableitungsrippe (4) mittels des Wärmeableitungsarms (6) verschlossen ist;
oder
wobei ein Umfang des Wärmeableitungsarms (6) mit einer Isolierschicht (5) ummantelt ist.

13. Elektrische Energieübertragungsanordnung nach Anspruch 1, wobei mindestens ein Teil des elektrischen Verbindungsgerüsts (3) ein flexibler Körper ist;
oder
wobei das elektrische Verbindungsgerüst (3) mindestens einen gebogenen Abschnitt umfasst;
oder
wobei einer der Verbinder (1) eine Ladebuchse ist.

14. Fahrzeug, umfassend die elektrische Energieübertragungsanordnung nach Anspruch 1, wobei ein Wärmeableitungsarm (6) weiter an einem Endabschnitt der Wärmeableitungsrippe (4) bereitgestellt ist, der vom elektrischen Verbindungsgerüst (3) entfernt ist, wobei
der Umfang des Wärmeableitarms (6) mit einer Isolierschicht (5) ummantelt ist, ein Hohlraum durch einen Spalt zwischen der Isolierschicht (5), der Kühlrippe (4) und dem Wärmeableitarm (6) ausgebildet ist und die Wärmeableitungsvorrichtung Luft in den Hohlraum leitet.

## Revendications

1. Ensemble de transmission d'énergie électrique pour une utilisation dans un véhicule, comprenant au moins un squelette de connexion électrique (3) et des connecteurs (1) fournis aux deux extrémités du squelette de connexion électrique (3), dans lequel chaque connecteur (1) comprend une borne de connexion (2), les deux extrémités du squelette de connexion électrique (3) sont connectées électriquement aux bornes de connexion (2), et au moins une ailette de dissipation de chaleur (4) est fournie sur la périphérie du squelette de connexion électrique (3),
**caractérisé en ce que** le véhicule comprend un dispositif de dissipation de chaleur, la périphérie de l'ailette de dissipation de chaleur (4) est recouverte d'une couche isolante (5), une cavité est formée par un interstice entre la couche isolante (5) et l'ailette de dissipation de chaleur (4), et le dispositif de dissipation de chaleur achemine l'air dans la cavité.

2. Ensemble de transmission d'énergie électrique selon la revendication 1, dans lequel le squelette de connexion électrique (3) est fait d'aluminium pur ou d'un alliage d'aluminium dont la teneur en aluminium est de 90 % ou plus ;
ou
dans lequel au moins une partie du squelette de connexion électrique (3) est de structure creuse ;
ou
dans lequel l'ailette de dissipation de chaleur (4) et le squelette de connexion électrique (3) sont faits de matériaux différents.

3. Ensemble de transmission d'énergie électrique selon la revendication 1, dans lequel l'ailette de dissipation de chaleur (4) est faite d'un matériau à haute conductivité thermique ;
de préférence dans lequel la conductivité thermique du matériau à haute conductivité thermique est supérieure ou égale à 98 W/m·K.

4. Ensemble de transmission d'énergie électrique selon la revendication 1, dans lequel une coupe transversale de l'ailette de dissipation de chaleur (4) est en une ou plusieurs formes sélectionnées parmi une forme d'arc, une forme d'engrenage, une forme trapézoïdale, une forme polygonale, une forme quadrangulaire, une forme fusiforme, une forme incurvée et une forme ondulée ;
de préférence dans lequel un angle inclus entre une direction d'une extension vers l'extérieur de l'ailette de dissipation de chaleur (4) à partir du squelette de connexion électrique (3) ou une direction tangentielle de l'extension vers l'extérieur et une direction radiale du squelette de connexion électrique (3) est de 0° à 53°.

5. Ensemble de transmission d'énergie électrique selon la revendication 1, dans lequel la largeur d'une coupe transversale de l'ailette de dissipation de chaleur (4) à une position proche du squelette de connexion électrique (3) est supérieure à celle de la coupe transversale de l'ailette de dissipation de chaleur (4) à une position éloignée du squelette de connexion électrique (3) ;
ou
dans lequel tous les coins d'une coupe transversale de l'ailette de dissipation de chaleur (4) sont chanfreinés ou arrondis.

6. Ensemble de transmission d'énergie électrique selon la revendication 1, dans lequel une pluralité d'ailettes de dissipation de chaleur (4) sont fournies, et la pluralité d'ailettes de dissipation de chaleur (4) sont réparties sur la périphérie du squelette de connexion électrique (3).

7. Ensemble de transmission d'énergie électrique selon la revendication 6, dans lequel la pluralité d'ailettes de dissipation de chaleur (4) sont uniformément réparties sur la périphérie du squelette de connexion électrique (3) ;
ou
dans lequel les hauteurs radiales de la pluralité d'ailettes de dissipation de chaleur (4) sont identiques ;
ou
dans lequel les hauteurs radiales de la pluralité d'ailettes de dissipation de chaleur (4) sont différentes, de préférence dans lequel les ailettes de dissipation de chaleur (4) avec les hauteurs radiales différentes sont agencées à intervalles.

8. Ensemble de transmission d'énergie électrique selon la revendication 1, dans lequel une hauteur radiale maximale de l'ailette de dissipation de chaleur (4) est égale à 1 % à 56 % d'un diamètre extérieur maximal du squelette de connexion électrique (3) ;
ou
dans lequel une face périphérique de l'ailette de dissipation de chaleur (4) est un plan ;
ou
dans lequel une face périphérique de l'ailette de dissipation de chaleur (4) est une face arquée.

9. Ensemble de transmission d'énergie électrique selon la revendication 1, dans lequel l'ailette de dissipation de chaleur (4) est agencée en une forme de spirale dans une direction axiale du squelette de connexion électrique (3) ;
de préférence dans lequel un pas de vis minimal de la forme de spirale est égal au diamètre extérieur maximal du squelette de connexion électrique (3).

10. Ensemble de transmission d'énergie électrique selon la revendication 1, dans lequel
la périphérie de la couche isolante (5) est en outre recouverte d'une couche de protection et d'une couche isolante extérieure (5).

11. Ensemble de transmission d'énergie électrique selon la revendication 1, dans lequel un bras de dissipation de chaleur (6) est en outre fourni à une partie extrémité de l'ailette de dissipation de chaleur (4) éloignée du squelette de connexion électrique (3), et l'ailette de dissipation de chaleur (4) et le bras de dissipation de chaleur (6) sont formés d'un seul bloc ;
ou
dans lequel un bras de dissipation de chaleur (6) est en outre fourni à une partie extrémité de l'ailette de dissipation de chaleur (4) éloignée du squelette de connexion électrique (3), et l'ailette de dissipation de chaleur (4) et le bras de dissipation de chaleur (6) sont reliés par soudage, collage, encliquetage, raccordement fileté ou sertissage.

12. Ensemble de transmission d'énergie électrique selon la revendication 11, dans lequel l'épaisseur du bras de dissipation de chaleur (6) dans une direction radiale est égale à 1 % à 35 % du diamètre extérieur maximal du squelette de connexion électrique (3) ;
ou
dans lequel le bras de dissipation de chaleur (6) est fait d'un matériau à haute conductivité thermique ;
ou
dans lequel une coupe transversale du bras de dissipation de chaleur (6) est en une ou plusieurs formes sélectionnées parmi une forme trapézoïdale, une forme polygonale, une forme quadrangulaire, une forme fusiforme, une forme incurvée ou une forme ondulée ;
ou
dans lequel l'ailette de dissipation de chaleur (4) est agencée à un certain angle par rapport au bras de dissipation de chaleur (6) ;
ou
dans lequel l'ailette de dissipation de chaleur (4) et le bras de dissipation de chaleur (6) sont agencés en forme de T ou en forme de L ;
ou
dans lequel la périphérie de l'ailette de dissipation de chaleur (4) est fermée au moyen du bras de dissipation de chaleur (6) ;
ou
dans lequel la périphérie du bras de dissipation de chaleur (6) est recouverte d'une couche isolante (5).

13. Ensemble de transmission d'énergie électrique selon la revendication 1, dans lequel au moins une partie du squelette de connexion électrique (3) est un corps flexible ;
ou
dans lequel le squelette de connexion électrique (3) comprend au moins une partie pliée ;
ou
dans lequel un des connecteurs (1) est une prise de charge.

14. Véhicule, comprenant l'ensemble de transmission d'énergie électrique selon la revendication 1, dans lequel un bras de dissipation de chaleur (6) est en outre fourni à une partie extrémité de l'ailette de dissipation de chaleur (4) éloignée du squelette de connexion électrique (3), dans lequel
la périphérie du bras de dissipation de chaleur (6) est recouverte d'une couche isolante (5), une cavité est formée par un interstice parmi la couche isolante (5), l'ailette de dissipation de chaleur (4) et le bras de dissipation de chaleur (6), et le dispositif de dissipation de chaleur achemine l'air dans la cavité.
